# EUROPÄISCHE PATENTSCHRIFT

(11) **EP 2 986 468 B1**
(45) Veröffentlichungstag und Bekanntmachung des Hinweises auf die Patenterteilung: **30.11.2016**
(21) Anmeldenummer: 14712625.4
(22) Anmeldetag: 17.03.2014
(51) Int. Cl.: B60L 11/18

(54) **VERFAHREN ZUM TEMPERIEREN EINER IN EINEM FAHRZEUG ANGEORDNETEN TRAKTIONSBATTERIE WÄHREND EINES LADEVORGANGS AN EINER LADESTATION UND LADESTATION ZUR AUSFÜHRUNG EINES SOLCHEN VERFAHRENS**
METHOD FOR THE TEMPERATURE CONTROL OF A TRACTION BATTERY ARRANGED IN A VEHICLE DURING A CHARGING PROCESS AT A CHARGING STATION, AND CHARGING STATION FOR PERFORMING SUCH A METHOD
PROCÉDÉ PERMETTANT DE THERMORÉGULER UNE BATTERIE DE TRACTION DISPOSÉE DANS UN VÉHICULE PENDANT UNE PROCÉDURE DE CHARGE DANS UNE STATION DE CHARGE, ET STATION DE CHARGE PERMETTANT DE METTRE EN UVRE UN TEL PROCÉDÉ

(30) Priorität: 18.04.2013 DE 102013206968; 04.03.2014 DE 102014203859
(43) Veröffentlichungstag der Anmeldung: 24.02.2016
(73) Patentinhaber: Robert Bosch GmbH, 70442 Stuttgart (DE); Samsung SDI Co., Ltd., Yongin-si, Gyeonggi-do 446-577 (KR)
(72) Erfinder: GALAMB, Gergely, 83278 Traunstein (DE)
(74) Vertreter: Bee, Joachim
(86) Internationale Anmeldenummer: PCT/EP2014/055227
(87) Internationale Veröffentlichungsnummer: WO 2014/170074

(56) Entgegenhaltungen:
- WO-A1-2007/118437
- WO-A1-2012/001280
- US-A1- 2011 223 459

## Beschreibung

Die Erfindung betrifft ein Verfahren zum Temperieren einer in einem Fahrzeug angeordneten Traktionsbatterie während eines Ladevorgangs an einer Ladestation, wobei die Traktionsbatterie wenigstens eine Kontaktierungsfläche zur thermischen Kontaktierung der Traktionsbatterie aufweist.

Ferner betrifft die Erfindung eine Ladestation zur Ausführung eines solchen Verfahrens.

### Stand der Technik

In elektrisch angetriebenen Fahrzeugen dient ein als Traktionsbatterie bezeichnetes nachladbares Batteriesystem als Energiequelle. Solche Traktionsbatterien sind insbesondere bei Plug-In-Hybrid-Fahrzeugen und bei Elektrofahrzeugen an hierfür eingerichteten Ladestationen nachladbar, wobei ein Anschlusskabel der Ladestation mit einer Ladebuchse des Fahrzeugs verbunden wird. Aus der Druckschrift DE 10 2010 007 975 A1 ist dabei das Problem bekannt, dass bei einer Schnellladung hohe Verlustleistungen entstehen, die zu einer hohen thermischen Belastung der Traktionsbatterie beziehungsweise der Batteriezellen der Traktionsbatterie führen. Aus diesem Grund ist eine Temperierung der Traktionsbatterie während des Ladevorgangs erforderlich, um die thermische Belastung der Traktionsbatterie während des Ladevorgangs zu verringern. Da eine Kühleinrichtung zur Temperierung der Traktionsbatterie während des Ladevorgangs eine aufwendige Technik erfordert, die zudem das Gesamtgewicht des Fahrzeugs erhöht, wird in der Druckschrift DE 10 2010 007 975 A1 eine Ladestation zum Nachladen einer in einem Fahrzeug angeordneten Traktionsbatterie offenbart, wobei die Ladestation eine Kühleinrichtung mit wenigstens einer an einem Kraftfahrzeug anschließbaren Kühlleitung zum Zuführen eines Kühlmittels zu der Traktionsbatterie aufweist. Die Traktionsbatterie soll ein Kühlmodul mit wenigstens einem Kühlkanal aufweisen, wobei beim Ladevorgang das mittels der Kühlleitung der Ladestation zugeführte Kühlmittel durch den Kühlkanal der Traktionsbatterie geleitet werden soll.

Darüber hinaus ist aus der Druckschrift DE 44 08 961 C1 ein Verfahren und eine Vorrichtung zur Temperierung einer Batterie eines Elektrofahrzeuges während eines Ladevorgangs an einer Ladestation bekannt, wobei nach Anschluss einer batterieseitigen Temperierfluidleitung an eine ladestationsseitige Temperierfluidquelle über eine ladestationsseitige Verbindungsleitung während des Ladevorgangs ein Temperierfluid durch die batterieseitige Temperierfluidleitung geleitet wird, und vor dem Abkoppeln der ladestationsseitigen Verbindungsleitung von der batterieseitigen Temperierfluidleitung das Temperierfluid aus der batterieseitigen Fluidleitung abgeführt wird.

Ferner ist aus der Druckschrift US 4,415,847 A eine Ladestation für eine Fahrzeugbatterie mit einer Kühleinrichtung und Zuleitungen zum Anschluss an einen Kühler für die Fahrzeugbatterie bekannt.

Zudem offenbart die Druckschrift FR 2 934 087 A3 eine Kühlstation mit einer Energiequelle zum Laden einer Batterie eines Fahrzeugs mit entsprechenden Anschlüssen zum Laden und Kühlen einer Fahrzeugbatterie.

Diesen vorbekannten Lösungen ist gemein, dass die nachzuladende Batterie eine Kühleinrichtung mit wenigstens einem Kühlkanal, durch welchen ein Kühlmittel strömen kann, aufweisen muss.

Ausgehend von diesem Stand der Technik ist es eine Aufgabe der vorliegenden Erfindung ein Verfahren zum Temperieren einer in einem Fahrzeug angeordneten Traktionsbatterie während eines Ladevorgangs an einer Ladestation bereitzustellen, welches gegenüber den bekannten Verfahren vereinfacht ist und es insbesondere ermöglicht, die Traktionsbatterie konstruktiv weiter zu vereinfachen und damit das Fahrzeuggewicht weiter zu reduzieren.

### Offenbarung der Erfindung

Zur Lösung der Aufgabe wird ein Verfahren zum Temperieren einer in einem Fahrzeug angeordneten Traktionsbatterie während eines Ladevorgangs an einer Ladestation vorgeschlagen, wobei die Traktionsbatterie wenigstens eine Kontaktierungsfläche zur thermischen Kontaktierung der Traktionsbatterie aufweist und wenigstens ein seitens der Ladestation bereitgestellter Kühlkörper mit der wenigstens einen Kontaktierungsfläche der Traktionsbatterie thermisch kontaktiert wird, derart, dass ein Austausch thermischer Energie zwischen dem wenigstens einen Kühlkörper und der Traktionsbatterie über die mit dem wenigstens einen Kühlkörper thermisch kontaktierte wenigstens eine Kontaktierungsfläche ermöglicht ist und die Traktionsbatterie zumindest während des Ladevorgangs durch den wenigstens einen Kühlkörper temperiert wird. Ein Temperieren der Traktionsbatterie ist dabei insbesondere ein Kühlen der Traktionsbatterie. Ferner ist vorgesehen, dass ein Temperieren der Traktionsbatterie vorteilhafterweise auch eine Wärmezufuhr von dem wenigstens einen Kühlkörper zu der Traktionsbatterie ist, also ein Erwärmen.

Die wenigstens eine Kontaktierungsfläche der Traktionsbatterie ist vorteilhafterweise von außen zugänglich. Vorzugsweise ist die wenigstens eine Kontaktierungsfläche der Traktionsbatterie am Fahrzeugunterboden angeordnet. Der wenigstens eine Kühlkörper wird mit der wenigstens einen Kontaktierungsfläche der Traktionsbatterie vorteilhafterweise lösbar in thermischen Kontakt gebracht, das heißt, dass der wenigstens eine Kühlkörper nicht dauerhaft an der Traktionsbatterie angeordnet beziehungsweise montiert wird. Zur Verbesserung der thermischen Kontaktierung zwischen der wenigstens einen Kontaktierungsfläche und dem wenigstens einen Kühlkörper kann gemäß einer vorteilhaften Ausgestaltung vorgesehen sein, dass ein Mittel zur Verbesserung der Wärmeleitfähigkeit auf den wenigstens einen Kühlkörper und/oder die wenigstens eine Kontaktfläche der Traktionsbatterie aufgebracht wird. Ein solches Mittel kann insbesondere ein Wärmeleitgel und/oder eine Wärmeleitpaste sein.

Ladevorgänge im Sinne der vorliegenden Erfindung sind insbesondere Schnellladevorgänge. Traktionsbatterien sind insbesondere aus einer Mehrzahl von elektrisch miteinander verschalteten Batteriezellen, wie insbesondere Lithium-Ionen-Zellen, aufgebaute nachladbare Batterien, welche als Energiespeicher zum Antrieb von Elektrofahrzeugen ausgebildet sind. Insbesondere ist eine Traktionsbatterie eine wenigstens eine Batteriezelle umfassende Batterie, welche zur Bereitstellung der für den Betrieb von Hybrid-, Plug-In-Hybrid- oder Elektrofahrzeugen erforderlichen Energie ausgebildet ist.

Bei der vorliegenden Erfindung wird vorteilhafterweise das aktive Kühlsystem für die Traktionsbatterie von dem Fahrzeug in die Ladestation beziehungsweise in die Ladesäule einer Ladestation verlagert. Durch den Wegfall des Kühlsystems ist das Batteriesystem des Fahrzeugs an sich vorteilhafterweise leichter und kleiner. Da die vorliegende Erfindung vorteilhafterweise einen Wegfall des komplexen Kühlsystems aus einem zumindest teilweise elektrisch betriebenen Fahrzeug ermöglicht, ist die Systemzuverlässigkeit eines solchen Fahrzeugs vorteilhafterweise erhöht. Dabei wird die Erkenntnis ausgenutzt, dass große thermische Belastungen der Traktionsbatterie nur bei hohen Strömen auftreten. Solche hohen Ströme treten im Fahrbetrieb des Fahrzeugs üblicherweise nur kurzzeitig auf, beispielsweise bei Ampelstarts, aber über einen längeren Zeitraum bei einer Schnellladung, bei der üblicherweise der maximal zulässige Strom fließt. Vorteilhafterweise ist die Nutzung der Traktionsbatterie als Energiequelle für das Fahrzeug derart mittels einer Steuer-/Regeleinrichtung geregelt, dass eine kritische Erwärmung der Traktionsbatterie im Fahrbetrieb verhindert wird. Insbesondere bei einer Schnellladung wird die Traktionsbatterie dabei erfindungsgemäß mittels wenigstens eines externen Kühlkörpers gekühlt.

Das vorgeschlagene erfindungsgemäße Verfahren ist vorteilhafterweise durchführbar, ohne dass die Traktionsbatterie eine Kühleinrichtung und/oder einen Kühlkanal aufweist. Hierdurch ist vorteilhafterweise eine Gewichtsreduzierung der Traktionsbatterie und somit des Fahrzeugs erzielbar. Darüber hinaus ist die Herstellung einer entsprechenden Traktionsbatterie vereinfacht, da die Traktionsbatterie lediglich wenigstens eine Kontaktierungsfläche zur thermischen Kontaktierung der Traktionsbatterie aufweisen muss und weder eine Kühleinrichtung noch Kühlkanäle. Somit sind vorteilhafterweise auch die Kosten zur Herstellung einer entsprechenden Traktionsbatterie reduziert. Das erfindungsgemäße Verfahren ist darüber hinaus gegenüber den im Stand der Technik bekannten Verfahren vereinfacht, da keine Kühlmittelleitungen an die Traktionsbatterie zur Durchführung eines Ladevorgangs angeschlossen werden müssen. Zudem wird mit dem erfindungsgemäßen Verfahren das Problem vermieden, dass, insbesondere nach dem Ladevorgang bei einem Trennen der ladestationsseitigen Kühlmittelleitungen von der Traktionsbatterie, Kühlmittel austreten kann, wobei ein Austreten von Kühlmittel schon allein aus Gründen des Umweltschutzes unerwünscht ist.

Gemäß einer besonders vorteilhaften Ausgestaltung der Erfindung ist der wenigstens eine Kühlkörper ausgebildet, die Traktionsbatterie derart zu temperieren, dass die Traktionsbatterie gekühlt wird oder die Traktionsbatterie erwärmt wird. Insbesondere ist dabei vorgesehen, dass der wenigstens eine Kühlkörper von einem Kühlmittel durchströmt wird, wobei die Kühlmitteltemperatur vorteilhafterweise einstellbar ist. Zur Wärmeabgabe von dem wenigstens einen Kühlkörper ist gemäß einer vorteilhaften Ausgestaltungsvariante der Erfindung ist vorgesehen, dass der wenigstens eine Kühlkörper elektrisch beheizbar ist. Eine Wärmezufuhr zu der Traktionsbatterie ist besonders vorteilhaft, wenn die Traktionsbatterie geladen werden soll und die Traktionsbatterie dabei eine niedrige Temperatur, beispielsweise eine Temperatur von 10°C, aufweist. Eine niedrige Temperatur der Traktionsbatterie kann insbesondere dann auftreten, wenn die Traktionsbatterie bei niedrigen Umgebungstemperaturen, insbesondere bei Frost, zuvor nicht oder nur kurze Zeit, beispielsweise nur zwei Minuten, genutzt wurde. Durch ein Erwärmen der Traktionsbatterie vor und/oder mit Beginn eines Ladevorgangs auf eine optimale Ladetemperatur ist dabei vorteilhafterweise der Ladevorgang beschleunigt durchführbar. Vorteilhafterweise wird die Temperatur der Traktionsbatterie vor und/oder während eines Ladevorgangs erfasst, vorzugsweise kontinuierlich, und die Temperatur des wenigstens einen Kühlkörpers in Abhängigkeit von der Temperatur der Traktionsbatterie geregelt. Vorzugsweise weist die Ladestation hierzu eine entsprechende Regelung auf.

Insbesondere ist vorgesehen, dass bei dem erfindungsgemäßen Verfahren zur thermischen Kontaktierung des wenigstens einen Kühlkörpers mit der wenigstens einen Kontaktierungsfläche der Traktionsbatterie der wenigstens eine Kühlkörper zu der Traktionsbatterie hin bewegt wird und/oder die Traktionsbatterie zu dem wenigstens einen Kühlkörper hin bewegt wird. Die Traktionsbatterie bleibt dabei vorteilhafterweise während des Ladevorgangs mit dem Fahrzeug verbunden. Insbesondere ist somit auch vorgesehen, dass der wenigstens eine Kühlkörper zu der Traktionsbatterie hin bewegt wird und darüber hinaus die Traktionsbatterie zu dem wenigstens einen Kühlkörper hin bewegt wird, damit der wenigstens eine Kühlkörper die wenigstens eine Kontaktierungsfläche der Traktionsbatterie thermisch kontaktiert. Vorteilhafterweise wird bei einem Bewegen der Traktionsbatterie das Fahrzeug zusammen mit der Traktionsbatterie bewegt. Vorteilhafterweise wird mittels wenigstens eines Sensors überwacht, ob der wenigstens eine Kühlkörper mit der wenigstens einen Kontaktierungsfläche der Traktionsbatterie thermisch kontaktiert ist. Vorteilhafterweise werden die Bewegungen von einer Steuereinheit gesteuert, vorzugsweise automatisiert.

Gemäß einer vorteilhaften Ausgestaltung des erfindungsgemäßen Verfahrens ist vorgesehen, dass die Traktionsbatterie vor Beginn des Ladevorgangs durch Positionieren des die Traktionsbatterie aufweisenden Fahrzeugs in eine definierte Position relativ zu der Position des wenigstens einen Kühlkörpers vor Beginn des Ladevorgangs verbracht wird. Die Position des wenigstens einen Kühlkörpers vor Beginn des Ladevorgangs ist dabei diejenige Position, die der wenigstens eine Kühlkörper innehat, bevor der Ladevorgang begonnen hat und insbesondere bevor die thermische Kontaktierung erfolgt ist.

Insbesondere ist vorgesehen, dass das die nachzuladende Traktionsbatterie aufweisende Fahrzeug mit der Kontaktierungsfläche der Traktionsbatterie über dem wenigstens einen Kühlkörper positioniert wird, bevor der wenigstens eine Kühlkörper mit der wenigstens einen Kontaktierungsfläche der Traktionsbatterie thermisch kontaktiert wird. Hierdurch ist vorteilhafterweise das thermische Kontaktieren des wenigstens einen Kühlkörpers mit der Traktionsbatterie beziehungsweise das thermische Kontaktieren der wenigstens einen Kontaktierungsfläche der Traktionsbatterie durch den wenigstens einen Kühlkörper vorteilhafterweise vereinfacht. Denn insbesondere ist somit durch eine einfache Aufwärtsbewegung des wenigstens einen Kühlkörpers und/oder eine einfache Abwärtsbewegung der Traktionsbatterie eine thermische Kontaktierung zur Temperierung der Traktionsbatterie während des Ladevorgangs ermöglicht.

Insbesondere ist vorgesehen, dass der Fahrer des die zu ladende Traktionsbatterie aufweisenden Fahrzeugs das Fahrzeug innerhalb einer entsprechend gekennzeichneten Markierung abstellt. Darüber hinaus ist insbesondere vor Beginn eines Ladevorgangs zu einer weiter verbesserten Positionierung der Traktionsbatterie relativ zur Position des wenigstens einen Kühlkörpers vor Beginn des Ladevorgangs vorgesehen, dass unter Nutzung einer Sensorik die Position des Fahrzeugs erfasst wird und dem Fahrer mittels einer Signalisierungsvorrichtung signalisiert wird, wie das Fahrzeug abzustellen ist. Vorteilhafterweise weist die Sensorik hierzu wenigstens einen Sensor auf, welcher die Position der Kontaktierungsfläche der Traktionsbatterie relativ zu dem wenigstens einen Kühlkörper erfasst. Vorteilhafterweise weist die wenigstens eine Kontaktierungsfläche der Traktionsbatterie hierzu Markierungen auf, welche von dem wenigstens einen Sensoren, beispielsweise von einer Kamera, erfasst werden, sodass vorteilhafterweise anhand der erfassten Markierungen die Position der Traktionsbatterie relativ zu der Position des wenigstens einen Kühlkörpers vor Beginn des Ladevorgangs bestimmt wird. Durch das Verbringen der Traktionsbatterie in eine definierte Position relativ zu der Position des wenigstens einen Kühlkörpers vor Beginn des Ladevorgangs ist vorteilhafterweise eine weiter vereinfachte Automatisierung des Verfahrens zum Temperieren der Traktionsbatterie während eines Ladevorgangs ermöglicht, insbesondere da die thermische Kontaktierung der wenigstens einen Kontaktierungsfläche der Traktionsbatterie mit dem wenigstens einen Kühlkörper automatisch erfolgen kann, wenn das die zu ladende Traktionsbatterie aufweisende Fahrzeug geeignet abgestellt ist. Automatisiert ausgelöst und durchgeführt wird das Verfahren vorteilhafterweise dann, wenn ein elektrisches Anschlusskabel der Ladestation mit dem Fahrzeug beziehungsweise der zu ladenden Traktionsbatterie verbunden wird.

Vorteilhafterweise umfasst das die Traktionsbatterie aufweisende Fahrzeug eine Traktionsbatteriepositionierungseinrichtung, wobei zur thermischen Kontaktierung des wenigstens einen Kühlkörpers mit der wenigstens einen Kontaktierungsfläche der Traktionsbatterie die Traktionsbatterie mittels der Traktionsbatteriepositionierungseinrichtung zu dem wenigstens einen Kühlkörper hin bewegt wird. Vorteilhafterweise ist das die Traktionsbatterie aufweisende Fahrzeug zuvor so abgestellt worden, dass die Traktionsbatterie über dem wenigstens einen Kühlkörper angeordnet ist. Vorteilhafterweise wird die Traktionsbatterie dann mittels der Traktionsbatteriepositionierungseinrichtung derart abgesenkt, dass der wenigstens eine Kühlkörper die wenigstens eine Kontaktierungsfläche der Traktionsbatterie thermisch kontaktiert. Das Positionieren der Traktionsbatterie mittels der Traktionsbatteriepositionierungseinrichtung kann insbesondere unter Nutzung wenigstens eines Elektromotors oder pneumatisch erfolgen. Vorteilhafterweise weist der Einbauraum beziehungsweise das Gehäuse der Traktionsbatterie die Traktionsbatteriepositionierungseinrichtung auf und/oder die Traktionsbatteriepositionierungseinrichtung ist Bestandteil des Einbauraumes beziehungsweise des Gehäuses.

Gemäß einer weiteren vorteilhaften Ausgestaltung des erfindungsgemäßen Verfahrens umfasst die Ladestation eine Fahrzeugpositionierungseinrichtung, wobei das die nachzuladende Traktionsbatterie aufweisende Fahrzeug auf der Fahrzeugpositionierungseinrichtung abgestellt wird und zur thermischen Kontaktierung des wenigstens einen Kühlkörpers mit der wenigstens einen Kontaktierungsfläche der Traktionsbatterie das Fahrzeug mittels der Fahrzeugpositionierungseinrichtung zu dem wenigstens einen Kühlkörper hin bewegt wird. Insbesondere ist vorgesehen, dass die Fahrzeugpositionierungseinrichtung nach Art einer Hebebühne ausgebildet ist. Insbesondere ist vorgesehen, dass die Fahrzeugpositionierungseinrichtung wenigstens eine Auflagefläche für die Räder des die Traktionsbatterie aufweisenden Fahrzeugs umfasst, auf welcher das Fahrzeug vorteilhafterweise derart positioniert wird, dass jedes der Räder auf der wenigstens einen Auflagefläche steht. Vorteilhafterweise ist die wenigstens eine Auflagefläche dabei in der Höhe variabel verstellbar, das heißt, dass die wenigstens eine Auflagefläche insbesondere absenkbar und anhebbar ist. Vorteilhafterweise wird hierbei die Traktionsbatterie durch das entsprechende Bewegen des Fahrzeugs in die gewünschte Position verbracht, in welcher vorteilhafterweise die thermische Kontaktierung der wenigstens einen Kontaktierungsfläche der Traktionsbatterie mit dem wenigstens einen Kühlkörper erfolgt.

Eine weitere vorteilhafte Ausgestaltung des erfindungsgemäßen Verfahrens sieht vor, dass der wenigstens eine Kühlkörper wenigstens eine erste Position und wenigstens eine zweite Position einnehmen kann, wobei der wenigstens eine Kühlkörper zur Temperierung der Traktionsbatterie aus der ersten Position in die zweite Position verbracht wird und der wenigstens eine Kühlkörper in der zweiten Position die wenigstens eine Kontaktierungsfläche der Traktionsbatterie thermisch kontaktiert. Insbesondere ist gemäß einer vorteilhaften Ausgestaltungsvariante hierbei vorgesehen, dass ausschließlich der wenigstens eine Kühlkörper zur thermischen Kontaktierung der wenigstens einen Kontaktfläche der Traktionsbatterie zu der Traktionsbatterie hin bewegt wird. Insbesondere wird somit ein Verfahren zum Temperieren einer in einem Fahrzeug angeordneten Traktionsbatterie während eines Ladevorgangs an einer Ladestation vorgeschlagen, wobei die Traktionsbatterie wenigstens eine Kontaktierungsfläche zur thermischen Kontaktierung der Traktionsbatterie aufweist und wenigstens ein seitens der Ladestation bereitgestellter Kühlkörper wenigstens eine erste Position und wenigstens eine zweite Position einnehmen kann, wobei der wenigstens eine Kühlkörper zur Temperierung der Traktionsbatterie aus der ersten Position in die zweite Position verbracht wird und der wenigstens eine Kühlkörper in der zweiten Position die wenigstens eine Kontaktierungsfläche der Traktionsbatterie thermisch kontaktiert, derart, dass ein Austausch thermischer Energie zwischen dem wenigstens einen Kühlkörper und der Traktionsbatterie über die mit dem wenigstens einen Kühlkörper thermisch kontaktierte wenigstens eine Kontaktierungsfläche ermöglicht ist und die Traktionsbatterie zumindest während des Ladevorgangs durch den wenigstens einen Kühlkörper temperiert wird.

Bei dem vorgeschlagenen Verfahren gemäß der vorliegenden Erfindung ist vorteilhafterweise vorgesehen, dass der wenigstens eine Kühlkörper nach dem Ladevorgang von der zweiten Position in die erste Position verbracht wird. Der wenigstens eine Kühlkörper wird also nach dem Ladevorgang wieder von der Traktionsbatterie getrennt. Vorteilhafterweise ist hierzu keine Trennung von Kühlmittelleitungen erforderlich, wodurch das Verfahren vorteilhafterweise gegenüber bislang bekannten Verfahren vereinfacht ist.

Gemäß einer vorteilhaften Ausgestaltung des Verfahrens ist vorgesehen, dass der wenigstens eine Kühlkörper in der ersten Position gekühlt wird, wobei der wenigstens eine Kühlkörper Mittel zur Speicherung thermischer Energie umfasst, sodass der wenigstens eine Kühlkörper bei thermischer Kontaktierung der wenigstens einen Kontaktierungsfläche der Traktionsbatterie eine Wärmesenke bildet. Bei dieser Ausgestaltung des Verfahrens erfolgt also während des Ladevorgangs keine aktive Kühlung des wenigstens einen Kühlkörpers. Stattdessen wird die thermische Kapazität des wenigstens einen Kühlkörpers genutzt, um die Traktionsbatterie zu kühlen. Der wenigstens eine Kühlkörper ist dabei vorteilhafterweise zumindest teilweise als Latentwärmespeicher ausgebildet, beispielsweise nach Art eines Kühlakkus. Vorzugsweise wird der wenigstens eine Kühlkörper dabei in der ersten Position auf eine Solltemperatur gebracht, welche bei der Temperierung der Traktionsbatterie mittels des wenigstens einen Kühlkörpers während des Ladevorgangs über den gesamten Ladevorgang hinweg eine hinreichend große Temperaturdifferenz zwischen dem wenigstens einen Kühlkörper und der Traktionsbatterie gewährleitstet, sodass während des Ladevorgangs der Traktionsbatterie entstehende Verlustwärme über den wenigstens einen Kühlkörper abgeführt wird.

Gemäß einer weiteren vorteilhaften Ausgestaltung des Verfahrens ist vorgesehen, dass der wenigstens eine Kühlkörper in der zweiten Position zumindest teilweise von einem Kühlmittel durchströmt wird, sodass der wenigstens eine Kühlkörper bei thermischer Kontaktierung der wenigstens einen Kontaktierungsfläche der Traktionsbatterie eine Wärmesenke bildet. Mittels eines Kühlsystems, welches vorteilhafterweise von der Ladestation gesteuert beziehungsweise geregelt wird, wird das Kühlmittel temperiert. Vorteilhafterweise ist eine Regelung, vorzugsweise seitens der Ladestation, vorgesehen, welche das Kühlmittel auf einer konstanten Temperatur hält. Auf diese Weise wird die Traktionsbatterie vorteilhafterweise gleichmäßig gekühlt.

Eine weitere Ausgestaltung des erfindungsgemäßen Verfahrens sieht vor, dass die Traktionsbatterie durch Positionieren des die Traktionsbatterie aufweisenden Fahrzeugs in eine definierte Position relativ zu der ersten Position des wenigstens einen Kühlkörpers verbracht wird. Insbesondere ist vorgesehen, dass der Fahrer des die zu ladende Traktionsbatterie aufweisenden Fahrzeugs das Fahrzeug innerhalb einer entsprechend gekennzeichneten Markierung abstellt. Darüber hinaus kann zu einer weiter verbesserten Positionierung der Traktionsbatterie relativ zu der ersten Position des wenigstens einen Kühlkörpers vorgesehen sein, dass unter Nutzung einer Sensorik die Position des Fahrzeugs erfasst wird und dem Fahrer mittels einer Signalisierungsvorrichtung signalisiert wird, wie das Fahrzeug abzustellen ist. Vorteilhafterweise weist die Sensorik hierzu wenigstens einen Sensor auf, welcher die Position der Kontaktierungsfläche der Traktionsbatterie relativ zu dem wenigstens einen Kühlkörper erfasst. Hierzu kann vorgesehen sein, dass Markierungen in und/oder an der wenigstens einen Kontaktierungsfläche der Traktionsbatterie angeordnet sind, welche von dem wenigstens einen Sensoren, beispielsweise von einer Kamera, erfasst werden, sodass anhand der erfassten Markierungen die Position der Traktionsbatterie relativ zu der ersten Position des wenigstens einen Kühlkörpers bestimmt werden kann. Durch das Verbringen der Traktionsbatterie in eine definierte Position relativ zu der ersten Position des wenigstens einen Kühlkörpers wird vorteilhafterweise eine weiter vereinfachte Automatisierung des Verfahrens zum Temperieren der Traktionsbatterie während eines Ladevorgangs ermöglicht, da insbesondere die thermische Kontaktierung der wenigstens einen Kontaktierungsfläche der Traktionsbatterie mit dem wenigstens einen Kühlkörper automatisch erfolgen kann, wenn das die zu ladende Traktionsbatterie aufweisende Fahrzeug geeignet abgestellt ist. Automatisiert ausgelöst und durchgeführt werden kann das Verfahren insbesondere wenn ein elektrisches Anschlusskabel der Ladestation mit dem Fahrzeug beziehungsweise der zu ladenden Traktionsbatterie verbunden wird.

Eine weitere vorteilhafte Ausgestaltung des erfindungsgemäßen Verfahrens sieht vor, dass der wenigstens eine Kühlkörper an einer steuerbaren Positionierungseinrichtung angeordnet ist, wobei die Positionierungseinrichtung derart gesteuert wird, dass der wenigstens eine Kühlkörper zur Temperierung der Traktionsbatterie von der Positionierungseinrichtung aus der ersten Position in die zweite Position verbracht wird. Vorzugsweise wird die Positionierungseinrichtung dabei von einer Steuereinrichtung gesteuert, besonders bevorzugt von einer Steuereinrichtung der Ladestation. Vorteilhafterweise wird mittels wenigstens eines Sensors überwacht, ob der wenigstens eine Kühlkörper mit der wenigstens einen Kontaktierungsfläche der Traktionsbatterie thermisch kontaktiert ist. Vorteilhafterweise sind die wenigstens eine Kontaktierungsfläche und der wenigstens eine Kühlkörper im Bereich der Kontaktierung deckungsgleich. Somit ist vorteilhafterweise ein besonders guter Austausch thermischer Energie ermöglicht.

Insbesondere ist vorgesehen, dass die Positionierungseinrichtung eine Hubeinrichtung ist und der wenigstens eine Kühlkörper in der ersten Position in Bodennähe angeordnet ist oder zumindest teilweise im Boden eingelassen ist, wobei das die nachzuladende Traktionsbatterie aufweisende Fahrzeug mit der wenigstens einen Kontaktierungsfläche der Traktionsbatterie über der Hubeinrichtung mit dem wenigstens einen Kühlkörper positioniert wird und der wenigstens eine Kühlkörper mittels der Hubeinrichtung in die zweite Position verbracht wird. Vorteilhafterweise wird der wenigstens eine Kühlkörper automatisch mittels der Hubeinrichtung in die zweite Position verbracht, wenn die Traktionsbatterie durch Positionieren des die Traktionsbatterie aufweisenden Fahrzeugs in eine definierte Position relativ zu der ersten Position des wenigstens einen Kühlkörpers verbracht wurde. Auslöser für das Verbringen des wenigstens einen Kühlkörpers in die zweite Position ist vorteilhafterweise das Verbinden der Traktionsbatterie mit einem Anschlusskabel der Ladestation. Gemäß einer weiteren vorteilhaften Ausgestaltung der Erfindung kann der wenigstens eine Kühlkörper beweglich an der Hubeinrichtung angeordnet sein, vorzugsweise nach Art eines Positioniertisches, sodass die Anordnung des wenigstens einen Kühlkörpers relativ zu der wenigstens einen Kontaktierungsfläche der Traktionsbatterie vorteilhafterweise nachjustierbar ist. Zur Durchführung der Justierung ist vorteilhafterweise eine an dem wenigstens einen Kühlkörper und/oder an der Positionierungseinrichtung angeordnete Sensorik vorgesehen, welche ausgebildet ist, die Position des wenigstens einen Kühlkörpers relativ zu der wenigstens einen Kontaktierungsfläche der Traktionsbatterie zu erfassen und den wenigstens einen Kühlkörper derart zu positionieren, dass eine vollständige Kontaktierung des wenigstens einen Kühlkörpers mit der wenigstens einen Kontaktierungsfläche der Traktionsbatterie ermöglicht ist. Das erfindungsgemäße Verfahren kann somit insbesondere als weiteren Verfahrensschritt ein Positionieren des wenigstens einen Kühlkörpers relativ zu der wenigstens einen Kontaktierungsfläche der Traktionsbatterie aufweisen, vorzugsweise indem mittels wenigstens eines Sensors und wenigstens einer Auswerteeinrichtung die relative Position des Kühlkörpers zu der Kontaktierungsfläche der Traktionsbatterie ermittelt wird und mittels entsprechender Stelleinrichtungen der wenigstens eine Kühlkörper in die entsprechende Position verbracht wird.

Gemäß einer weiteren Ausgestaltung der Erfindung wird der wenigstens eine Kühlkörper mit der wenigstens einen Kontaktierungsfläche der Traktionsbatterie in der zweiten Position lösbar verbunden. Hierdurch ist vorteilhafterweise eine weitere Verbesserung der thermischen Kontaktierung zwischen dem wenigstens einen Kühlkörper und der wenigstens einen Kontaktierungsfläche der Traktionsbatterie erzielbar. Insbesondere kann vorgesehen sein, dass die wenigstens eine Kontaktierungsfläche zumindest teilweise magnetisch ausgebildet ist, und der wenigstens eine Kühlkörper wenigstens einen Magneten, vorzugsweise wenigstens einen Elektromagneten aufweist, sodass die lösbare Verbindung unter Nutzung der magnetischen Anziehungskraft hergestellt wird.

Gemäß einer weiteren vorteilhaften Ausgestaltung der Erfindung ist vorgesehen, dass die Traktionsbatterie und/oder die wenigstens eine Kontaktierungsfläche der Traktionsbatterie wenigstens ein Haltemittel zur Halterung des wenigstens einen Kühlkörpers aufweist, wobei der wenigstens eine Kühlkörper unter Nutzung des wenigstens einen Haltemittels mit der wenigstens einen Kontaktierungsfläche in thermischen Kontakt gebracht wird. Eine solche Ausgestaltung ist insbesondere dann vorteilhaft, wenn die thermische Kontaktierung von dem wenigstens einem Kühlkörper mit der wenigstens einen Kontaktierungsfläche nicht automatisiert erfolgen soll. Insbesondere kann das wenigstens eine Haltemittel als Fach zur Aufnahme des wenigstens einen Kühlkörpers ausgebildet sein, wobei der wenigstens eine Kühlkörper durch Einbringen in das Fach mit der wenigstens einen Kontaktierungsfläche der Traktionsbatterie in thermischen Kontakt gebracht wird. Vorteilhafterweise ist das als Fach ausgestaltete Haltemittel an die äußere Form des wenigstens einen Kühlkörpers angepasst, sodass der wenigstens eine Kühlkörper vorteilhafterweise im Wesentlichen passgenau in das Fach eingebracht werden kann. Dabei ist insbesondere vorgesehen, dass der wenigstens eine Kühlkörper als Latentwärmespeicher, vorzugsweise nach Art eines Kühlakkus, ausgestaltet ist. Ein oder mehrere solcher Latentwärmespeicher werden vorteilhafterweise seitens der Ladestation vorgehalten und entweder manuell, beispielsweise von dem Fahrer des die zu ladende Traktionsbatterie aufweisenden Fahrzeugs oder automatisiert mittels einer Positionierungseinrichtung in das Fach eingebracht. Vorteilhafterweise erkennt eine Sensorik, ob ein Latentwärmespeicher in das Fach eingebracht ist. Nur wenn ein Latentwärmespeicher in das Fach eingebracht ist, wird ein Nachladen der Traktionsbatterie ermöglicht. Nach dem Ladevorgang wird der Latentwärmespeicher wieder entnommen.

Gemäß einer weiteren vorteilhaften Ausgestaltung des erfindungsgemäßen Verfahrens ist vorgesehen, dass der wenigstens eine Kühlkörper vor Beginn eines Ladevorgangs und/oder nach Ende eines Ladevorgangs gekühlt wird, wobei der wenigstens eine Kühlkörper Mittel zur Speicherung thermischer Energie umfasst, sodass der wenigstens eine Kühlkörper bei thermischer Kontaktierung der wenigstens einen Kontaktierungsfläche der Traktionsbatterie eine Wärmesenke bildet. Insbesondere ist dabei eine Ausgestaltungsvariante vorgesehen, bei der während des Ladevorgangs keine aktive Kühlung des wenigstens einen Kühlkörpers erfolgt. Stattdessen wird die thermische Kapazität des wenigstens einen Kühlkörpers genutzt, um die Traktionsbatterie zu kühlen. Der wenigstens eine Kühlkörper ist dabei vorteilhafterweise zumindest teilweise als Latentwärmespeicher ausgebildet, beispielsweise nach Art eines Kühlakkus. Insbesondere ist vorgesehen, dass der wenigstens eine Kühlkörper hierzu einen flüssigkeitsgefüllten Hohlraum aufweist, insbesondere einen mit einem Kühlmittel gefüllten Hohlraum. Vorzugsweise wird der wenigstens eine Kühlkörper dabei vor Beginn eines Ladevorgangs und/oder nach Ende eines Ladevorgangs auf eine Solltemperatur gebracht, welche bei der Temperierung der Traktionsbatterie mittels des wenigstens einen Kühlkörpers während des Ladevorgangs über den gesamten Ladevorgang hinweg eine hinreichend große Temperaturdifferenz zwischen dem wenigstens einen Kühlkörper und der Traktionsbatterie gewährleitstet, sodass während des Ladevorgangs der Traktionsbatterie entstehende Verlustwärme über den wenigstens einen Kühlkörper abgeführt wird.

Besonders bevorzugt wird der der wenigstens eine Kühlkörper während eines Ladevorgangs zumindest teilweise von einem Kühlmittel durchströmt, sodass der wenigstens eine Kühlkörper bei thermischer Kontaktierung der wenigstens einen Kontaktierungsfläche der Traktionsbatterie eine Wärmesenke bildet. Vorteilhafterweise wird mittels eines Kühlsystems, welches vorteilhafterweise von der Ladestation gesteuert beziehungsweise geregelt wird, das Kühlmittel temperiert. Vorteilhafterweise ist eine Regelung vorgesehen, vorzugsweise eine seitens der Ladestation bereitgestellte Regelung, wobei die Regelung das Kühlmittel auf einer konstanten Temperatur hält. Auf diese Weise wird die Traktionsbatterie vorteilhafterweise gleichmäßig gekühlt.

Zur Lösung der eingangs genannten Aufgabe wird mit der vorliegenden Erfindung des Weiteren eine Ladestation zum Nachladen einer in einem Fahrzeug angeordneten Traktionsbatterie vorgeschlagen, wobei die Traktionsbatterie wenigstens eine Kontaktierungsfläche zur thermischen Kontaktierung der Traktionsbatterie aufweist und die Ladestation Mittel zum Ausführen eines erfindungsgemäßen Verfahrens aufweist. Die Ladestation ist dabei insbesondere eine Schnellladestation. Insbesondere ist vorgesehen, dass die Ladestation zum Nachladen einer in einem Fahrzeug angeordneten Traktionsbatterie wenigstens einen Kühlkörper zum Temperieren der zu ladenden Traktionsbatterie aufweist. Der wenigstens eine Kühlkörper ist dabei insbesondere ausgebildet, die Traktionsbatterie zu kühlen oder zu erwärmen. Vorzugsweise weist die Ladestation eine Regeleinrichtung auf, welche ausgebildet ist, die Temperatur des wenigstens einen Kühlkörpers zu regeln, insbesondere in Abhängigkeit der Temperatur der Traktionsbatterie. Vorzugsweise weist die Ladestation dabei eine Temperaturerfassungseinrichtung auf, die ausgebildet ist, die Temperatur der Traktionsbatterie zu erfassen.

Gemäß einer bevorzugten Ausgestaltung der erfindungsgemäßen Ladestation ist vorgesehen, dass die Ladestation eine Positionierungseinrichtung umfasst, an welcher der wenigstens eine Kühlkörper angeordnet ist, wobei der wenigstens eine Kühlkörper mittels der Positionierungsvorrichtung in wenigstens eine erste Position und in wenigstens eine zweite Position verbringbar ist, wobei der wenigstens eine Kühlkörper in der wenigstens einen zweiten Position mit der wenigstens einen Kontaktierungsfläche der zu ladenden Traktionsbatterie thermisch kontaktierbar ist. Vorteilhafterweise umfasst die Ladestation ferner wenigstens einen Sensor, insbesondere wenigstens eine Kamera, welche die Position einer zu ladenden Traktionsbatterie relativ zu dem Kühlkörper der Ladestation ermitteln kann. Mittels der Positionierungseinrichtung der Ladestation und/oder wenigstens einer vorzugsweise an der Positionierungseinrichtung angeordneten Stelleinrichtung ist dabei vorteilhafterweise ein Positionieren, vorzugsweise ein automatisches Positionieren, des wenigstens einen Kühlkörpers in die wenigstens eine zweite Position derart ermöglicht, dass die wenigstens eine Kontaktierungsfläche der Traktionsbatterie von dem wenigstens einem Kühlkörper thermisch kontaktierbar ist, vorzugsweise vollständig kontaktierbar ist. Gemäß einer weiteren vorteilhaften Ausgestaltung ist die Positionierungseinrichtung eine Hubeinrichtung, wobei der wenigstens eine Kühlkörper in der ersten Position in Bodennähe angeordnet ist oder zumindest teilweise im Boden eingelassen ist und wobei die Hubeinrichtung ausgebildet ist, den wenigstens einen Kühlkörper zur thermischen Kontaktierung von der ersten Position in die zweite Position zu verbringen.

Eine weitere vorteilhafte Ausgestaltung der Erfindung sieht vor, dass die Ladestation eine Fahrzeugpositionierungseinrichtung umfasst. Die Fahrzeugpositionierungseinrichtung ist dabei vorteilhafterweise ausgebildet, ein auf der Fahrzeugpositionierungseinrichtung abgestelltes, die nachzuladende Traktionsbatterie aufweisendes Fahrzeug zur thermischen Kontaktierung des wenigstens einen Kühlkörpers mit der wenigstens einen Kontaktierungsfläche der Traktionsbatterie zu dem wenigstens einen Kühlkörper hin zu bewegen. Vorteilhafterweise ist die Fahrzeugpositionierungseinrichtung dabei mit Sensoren zur Erfassung der Position der Traktionsbatterie in Bezug auf den wenigstens einen Kühlkörper verbunden, wobei die thermische Kontaktierung vorzugsweise automatisiert erfolgt, insbesondere unter Nutzung der Sensordaten mittels der Fahrzeugpositionierungseinrichtung.

Weitere vorteilhafte Einzelheiten, Merkmale und Ausführungsdetails des erfindungsgemäßen Verfahrens zum Temperieren einer in einem Fahrzeug angeordneten Traktionsbatterie während eines Ladevorgangs an einer erfindungsgemäßen Ladestation sowie einer erfindungsgemäßen Ladestation werden im Zusammenhang mit den in den Figuren dargestellten Ausführungsbeispielen näher erläutert. Dabei zeigt:
- Fig.1: in einer schematischen Darstellung ein Ausführungsbeispiel der Erfindung, wobei eine in einem Fahrzeug angeordnete Traktionsbatterie an einer Ladestation geladen werden soll;
- Fig. 2: in einer schematischen Darstellung ein Ausführungsbeispiel der Erfindung, wobei eine in einem Fahrzeug angeordnete Traktionsbatterie während eines Ladevorgangs temperiert wird;
- Fig. 3: in einer schematischen Darstellung ein weiteres Ausführungsbeispiel der Erfindung, wobei eine in einem Fahrzeug angeordnete Traktionsbatterie an einer Ladestation geladen werden soll; und
- Fig. 4: in einer schematischen Darstellung ein weiteres Ausführungsbeispiel der Erfindung, wobei eine in einem Fahrzeug angeordnete Traktionsbatterie an einer Ladestation geladen werden soll.

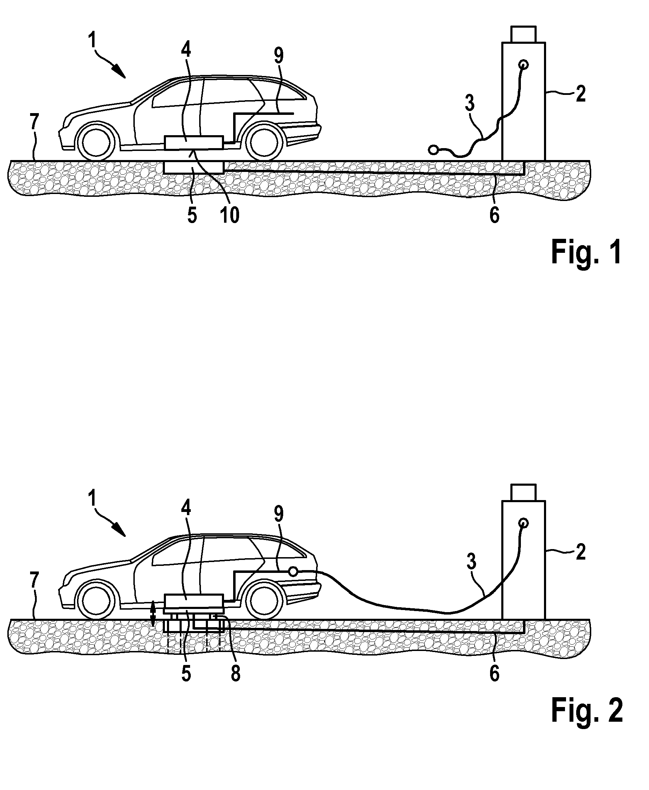

In Fig. 1 ist ein Elektrofahrzeug 1 mit einer Traktionsbatterie 4 dargestellt. Des Weiteren ist in Fig. 1 eine Ladestation 2 dargestellt, welche insbesondere eine Schnellladung einer Traktionsbatterie 4 eines Fahrzeuges 1 ermöglicht. Die Ladestation 2 weist dabei eine Anschlussleitung 3 zum elektrisch leitfähigen Verbinden der Ladestation 2 mit der Traktionsbatterie 4 auf. Des Weiteren umfasst die Ladestation 2 einen in den Boden 7 eingelassenen Kühlkörper 5 zur Temperierung einer in einem Fahrzeug angeordneten zu ladenden Traktionsbatterie während eines Ladevorgangs an der Ladestation 2. Der Kühlkörper 5 wird dabei von einem Kühlmittel (in Fig. 1 nicht explizit dargestellt) durchströmt. Über eine Kühlmittelleitung 6 steht der Kühlkörper 5 dabei mit einem seitens der Ladestation 2 bereitgestellten Kühlaggregat (in Fig. 1 nicht explizit dargestellt) in Verbindung, wobei das Kühlaggregat die Temperatur des Kühlmittels auf einen vorgegebenen Sollwert temperiert.

Die Ladestation 2 weist zudem eine Positionierungseinrichtung (in Fig. 1 nicht explizit dargestellt) auf, an welcher der Kühlkörper 5 angeordnet ist. Die Positionierungseinrichtung ist in den dargestellten Ausführungsbeispielen eine Hubeinrichtung, welche ausgebildet ist, den Kühlkörper 5 in eine erste Position und in eine zweite Position zu verbringen. In Fig. 1 ist der Kühlkörper 5 dabei in der ersten Position dargestellt. In Fig. 2 ist der Kühlkörper 5 in der zweiten Position dargestellt. Die Hubeinrichtung ist ausgebildet, den Kühlkörper 5 aus der ersten Position nach oben zu bewegen, sodass der Kühlkörper 5 die zweite Position einnehmen kann, und den Kühlkörper 5 aus der zweiten Position wieder abzusenken, sodass der Kühlköper 5 wieder die erste Position einnehmen kann. In der zweiten Position ist der Kühlkörper 5 mit der Kontaktierungsfläche einer Traktionsbatterie 4 thermisch kontaktierbar.

Vor Beginn eines Ladevorgangs unter Nutzung der Ladestation 2 wird zunächst die Traktionsbatterie 4 durch Positionieren des die Traktionsbatterie 4 aufweisenden Fahrzeugs 1 in eine definierte Position relativ zu der ersten Position des Kühlkörpers 5 verbracht. In dem dargestellten Ausführungsbeispiel ist die definierte Position dann erreicht, wenn die Traktionsbatterie 4 über dem Kühlkörper 5 angeordnet ist. Damit die Traktionsbatterie 4 beziehungsweise das Fahrzeug 1 geeignet abgestellt wird, können auf dem Boden 7 Markierungen (in Fig. 1 und Fig. 2 nicht explizit dargestellt) vorhanden sein, an welcher sich der Fahrer des Fahrzeugs 1 beim Positionieren des Fahrzeugs 1 orientieren kann. Zur präziseren Positionierung des Fahrzeugs 1 können in dem Boden 7 und/oder in den Kühlkörper 5 Sensoren (in Fig. 1 und Fig. 2 nicht explizit dargestellt) eingelassen sein, welche anhand von an der Traktionsbatterie 4 angeordneten Markierungen die Position der Traktionsbatterie 4 erfassen können. Von den Sensoren erfasste Daten werden an die Ladestation 2 übertragen, welche über eine Signalisierungseinrichtung, beispielsweise ein Display oder eine Sprachausgabe (in Fig. 1 und Fig. 2 nicht explizit dargestellt), dem Fahrer signalisiert, ob und gegebenenfalls wie die Fahrzeugposition korrigiert werden muss, bevor der Ladevorgang beginnen kann.

Zur Temperierung der Traktionsbatterie 4 während des Ladevorgangs weist die Traktionsbatterie 4 eine Kontaktierungsfläche 10 zur thermischen Kontaktierung der Traktionsbatterie 4 auf. Die Kontaktierungsfläche 10 der Traktionsbatterie 4 erstreckt sich in den in Fig. 1 und Fig. 2 dargestellten Ausführungsbeispielen über die gesamte untere Fläche der Traktionsbatterie 4. Die Kontaktierungsfläche ist dabei von außen frei zugänglich. In einer nicht dargestellten Ausführungsvariante ist ein Schutz vor Verunreinigung vorgesehen, beispielsweise eine Kunststoffabdeckung, welche, vorzugsweise automatisch, vor einem Ladevorgang von der Kontaktierungsfläche entfernt wird, beispielsweise indem der Schutz automatisch unter Nutzung einer Stelleinrichtung zurückfährt.

Nachdem das Fahrzeug 1 an geeigneter Position abgestellt ist, wie in Fig. 1 und Fig. 2 dargestellt, wird, die Traktionsbatterie 4, wie in Fig. 2 dargestellt, über eine fahrzeuginterne Anschlussleitung 9 mittels der Anschlussleitung 3 mit der Ladestation 2 elektrisch leitfähig verbunden. Das Verbinden der Traktionsbatterie 4 mit der Ladestation 2 ist dabei der Auslöser dafür, dass der Kühlkörper 5 mittels der Hubeinrichtung 8 in die zweite Position gebracht wird, wobei der Kühlkörper 5 die Kontaktierungsfläche der Traktionsbatterie 4 in der zweiten Position thermisch kontaktiert.

In dem in Fig. 2 dargestellten Ausführungsbeispiel ist die Hubeinrichtung 8 pneumatisch realisiert. Dabei kann der Kühlkörper 5 unter Nutzung der Hubeinrichtung 8 nach oben und nach unten bewegt werden, wie durch den in Fig. 2 dargestellten Doppelpfeil symbolisch dargestellt. Der Kühlkörper 5 kann unter Nutzung der Hubeinrichtung 8 somit insbesondere zwischen der ersten Position, in welcher der Kühlkörper 5 in dem Boden 7 eingelassen ist (wie in Fig. 1 gezeigt) und der zweiten Position, in welcher der Kühlkörper 5 die Kontaktierungsfläche der Traktionsbatterie 4 thermisch kontaktiert (wie in Fig. 2 gezeigt) bewegt werden. Das Ausfahren des Kühlkörpers 5 kann insbesondere dann gestoppt werden, wenn ein bestimmter Druckgrenzwert, welcher beim Kontaktieren der Traktionsbatterie auf den Kühlkörper 5 wirkt, erreicht wird. Der auf den Kühlkörper 5 wirkende Druck wird dabei von wenigstens einem Sensor (in Fig. 1 und Fig. 2 nicht explizit dargestellt) erfasst.

Befindet sich der Kühlkörper 5 in der zweiten Position, sodass der Kühlkörper 5 die Kontaktierungsfläche 10 der Traktionsbatterie 4 thermisch kontaktiert, wird der Kühlkörper 5 von einem Kühlmittel (in Fig. 2 nicht explizit dargestellt), beispielsweise dem Kühlmittel R1234yf, durchströmt. Hierdurch bildet der Kühlkörper 5 eine Wärmesenke, sodass bei der Schnellladung der Traktionsbatterie 4 an der Ladestation 2 entstehende Verlustwärme über den Kühlkörper 5 an das Kühlmittel abgeführt werden kann.

In einer in Fig. 1 und Fig. 2 nicht dargestellten Ausführungsvariante weist der Kühlkörper 5 Mittel zur Speicherung thermischer Energie auf, insbesondere wenigstens einen Latentwärmespeicher, vorzugsweise einen nach Art eines Kühlakkus ausgebildeten Latentwärmespeicher, welcher bei thermischer Kontaktierung der Kontaktierungsfläche 10 der Traktionsbatterie 4 eine Wärmesenke bildet. Ein solcher Kühlkörper 5 wird während der thermischen Kontaktierung mit der Traktionsbatterie 4 nicht aktiv gekühlt. Die Kühlung eines solchen Kühlkörpers 5 und damit das Verbringen dieses Kühlkörpers 5 auf eine Solltemperatur erfolgt durch eine im Boden 7 eingelassene aktive Kühlung, wenn der Kühlkörper 5 die erste Position einnimmt, also zumindest teilweise im Boden 7 eingelassen ist.

Ist der Ladevorgang der Traktionsbatterie 4 beendet, wird der Kühlkörper 5 unter Nutzung der Hubeinrichtung 8 von der zweiten Position wieder in die erste Position verbracht. Dies kann beispielsweise durch Trennung der Anschlussverbindung 3 der Ladestation 2 von der Traktionsbatterie 4 ausgelöst werden. Während des gesamten Ladevorgangs der Traktionsbatterie 4 ist der Kühlkörper 5 mit der Kontaktierungsfläche 10 der Traktionsbatterie 4 in der zweiten Position lösbar verbunden. Die Traktionsbatterie 4 selbst weist keinen Kühlkörper beziehungsweise keine Mittel zur Kühlung der Batterie während eines Ladevorgangs auf.

Insbesondere für nicht-öffentliche Ladestationen kann vorgesehen sein, dass zur Reduzierung des technischen Aufwandes der Ladestation, insbesondere des technischen Aufwandes hinsichtlich einer automatischen thermischen Kontaktierung der Kontaktierungsfläche einer Traktionsbatterie mit einem Kühlkörper, die Traktionsbatterie beziehungsweise die Kontaktierungsfläche der Traktionsbatterie ein Haltemittel zur Halterung wenigstens eines Kühlkörpers aufweist. Der Kühlkörper, vorzugsweise ein Kühlkörper mit Mitteln zur Speicherung thermischer Energie, wie ein Latentwärmespeicher, welcher auf einen niedrigen Temperaturwert heruntergekühlt wurde, wird dann unter Nutzung des Haltemittels mit der Kontaktierungsfläche der Traktionsbatterie in thermischen Kontakt gebracht, vorzugsweise indem ein entsprechend ausgebildeter Kühlkörper in das Haltemittel eingeschoben wird. Nach dem Ladevorgang kann der Kühlkörper dann wieder aus dem Haltemittel entfernt werden und in eine Kühleinrichtung gebracht werden, welches den Kühlkörper wieder auf eine niedrigere Temperatur herunterkühlt.

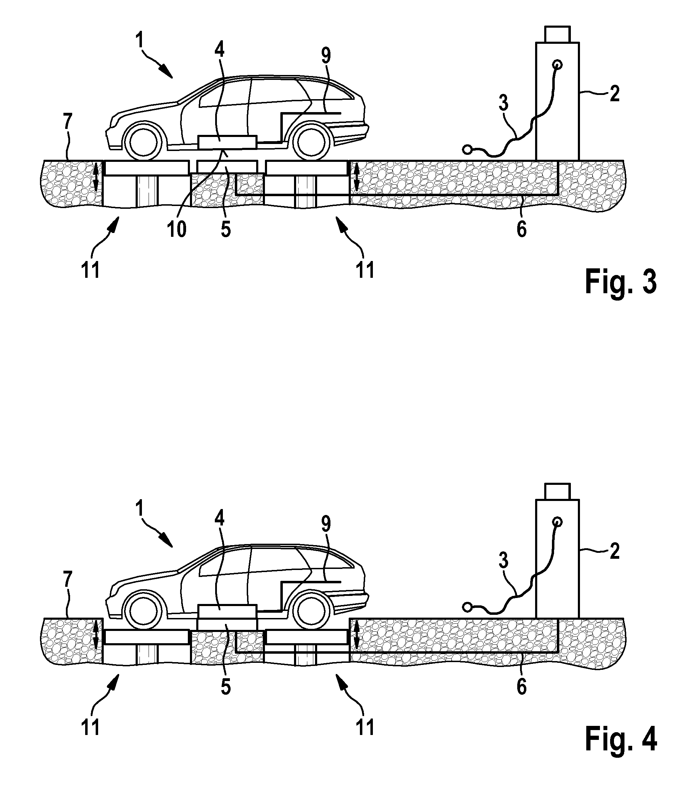

Im Zusammenhang mit Fig. 3 und Fig. 4 wird ein weiteres vorteilhaftes Ausführungsbeispiel der Erfindung näher erläutert. Die Ladestation 2 umfasst hierbei eine Fahrzeugpositionierungseinrichtung 11, welche ähnlich einer Hebebühne für ein Fahrzeug ausgestaltet sein kann.

Des Weiteren umfasst die Ladestation 2 einen Kühlkörper 5. Dieser ist vorzugsweise fest im Boden 7 integriert und wird über eine Kühlmittelleitung 6 von einem Kühlmittel (in Fig. 3 und Fig. 4 nicht explizit dargestellt) durchströmt. Die Kühlmitteltemperatur wird dabei vorteilhafterweise durch ein Kühlsystem (in Fig. 3 und Fig. 4 nicht explizit dargestellt) der Ladestation 2 geregelt.

Dabei ist vorgesehen, dass ein Fahrzeug 1, wie in Fig. 3 und Fig. 4 dargestellt, auf der Fahrzeugpositionierungseinrichtung 11 abgestellt wird. Das Fahrzeug 1 weist dabei eine nachzuladende Traktionsbatterie 4 auf, welche derart angeordnet ist, dass eine Kontaktierungsfläche 10 der Traktionsbatterie 4 zum thermischen Kontaktieren der Traktionsbatterie 4 mit wenigstens einem Kühlkörper 5 zum Boden 7 hin gerichtet und frei zugänglich ist.

Vorteilhafterweise weist die Fahrzeugpositionierungseinrichtung 11 jeweils für die Vorderräder und die Hinterräder des Fahrzeugs 1 jeweils eine Auflagefläche auf, wobei das Fahrzeug 1 derart positioniert wird, dass die Hinterräder auf einer Auflagefläche der Fahrzeugpositionierungseinrichtung 11 und die Vorderräder auf einer weiteren Auflagefläche der Fahrzeugpositionierungseinrichtung 11 stehen. Die Fahrzeugpositionierungseinrichtung 11 beziehungsweise die Auflageflächen der Fahrzeugpositionierungseinrichtung 11 sind dabei in der Höhe variabel verstellbar, wie in Fig. 3 und Fig. 4 symbolisch durch die Doppelpfeile dargestellt. Das heißt, dass die Auflageflächen absenkbar und anhebbar sind.

Das die nachzuladende Traktionsbatterie 4 aufweisende Fahrzeug 1 wird dabei, wie in Fig. 3 dargestellt, mit der Kontaktierungsfläche 10 der Traktionsbatterie 4 über dem Kühlkörper 5 positioniert, bevor der Kühlkörper 5 mit der Kontaktierungsfläche 10 der Traktionsbatterie 4 thermisch kontaktiert wird.

Nachdem das Fahrzeug 1, wie in Fig. 3 positioniert ist, wird die Traktionsbatterie 4 zusammen mit dem Fahrzeug 1 zu dem Kühlkörper 5 hin bewegt, indem die Fahrzeugpositionierungseinrichtung 11 mit dem darauf positionierten Fahrzeug 1 abgesenkt wird. Die Fahrzeugpositionierungseinrichtung 11 mit dem darauf befindlichen Fahrzeug 1 wird dabei solange abgesenkt, bis die Kontaktierungsfläche 10 der Traktionsbatterie 4 den Kühlkörper 5 thermisch kontaktiert hat, derart, dass ein Austausch thermischer Energie zwischen dem Kühlkörper 5 und der Traktionsbatterie 4 über die mit dem Kühlkörper 5 thermisch kontaktierte Kontaktierungsfläche 10 ermöglicht ist und die Traktionsbatterie 4 zumindest während eines anschließend nach Verbinden der Verbindungsleitung 3 mit der fahrzeugseitigen Verbindungsleitung 9 vorgesehenen Ladevorgangs durch den Kühlkörper 5 temperiert wird.

Die in den Figuren dargestellten und im Zusammenhang mit diesen erläuterten Ausführungsbeispiele dienen der Erläuterung der Erfindung und sind für diese nicht beschränkend.

## Patentansprüche

1. Verfahren zum Temperieren einer in einem Fahrzeug (1) angeordneten Traktionsbatterie (4) während eines Ladevorgangs an einer Ladestation (2), wobei die Traktionsbatterie (4) wenigstens eine Kontaktierungsfläche (10) zur thermischen Kontaktierung der Traktionsbatterie (4) aufweist, **dadurch gekennzeichnet, dass** wenigstens ein seitens der Ladestation (2) bereitgestellter Kühlkörper (5) mit der wenigstens einen Kontaktierungsfläche (10) der Traktionsbatterie (4) thermisch kontaktiert wird, derart, dass ein Austausch thermischer Energie zwischen dem wenigstens einen Kühlkörper (5) und der Traktionsbatterie (4) über die mit dem wenigstens einen Kühlkörper (5) thermisch kontaktierte wenigstens eine Kontaktierungsfläche (10) ermöglicht ist und die Traktionsbatterie (4) zumindest während des Ladevorgangs durch den wenigstens einen Kühlkörper (5) temperiert wird.

2. Verfahren nach Anspruch 1, **dadurch gekennzeichnet, dass** zur thermischen Kontaktierung des wenigstens einen Kühlkörpers (5) mit der wenigstens einen Kontaktierungsfläche (10) der Traktionsbatterie (4) der wenigstens eine Kühlkörper (5) zu der Traktionsbatterie (4) hin bewegt wird und/oder die Traktionsbatterie (4) zu dem wenigstens einen Kühlkörper (5) hin bewegt wird, wobei die Traktionsbatterie (4) während des Ladevorgangs mit dem Fahrzeug (1) verbunden bleibt.

3. Verfahren nach einem der vorhergehenden Ansprüche, **dadurch gekennzeichnet, dass** die Traktionsbatterie (4) vor Beginn des Ladevorgangs durch Positionieren des die Traktionsbatterie (4) aufweisenden Fahrzeugs (1) in eine definierte Position relativ zu der Position des wenigstens einen Kühlkörpers (5) vor Beginn des Ladevorgangs verbracht wird.

4. Verfahren nach einem der vorhergehenden Ansprüche, **dadurch gekennzeichnet, dass** das die Traktionsbatterie (4) aufweisende Fahrzeug (1) eine Traktionsbatteriepositionierungseinrichtung umfasst, wobei zur thermischen Kontaktierung des wenigstens einen Kühlkörpers (5) mit der wenigstens einen Kontaktierungsfläche (10) der Traktionsbatterie (4) die Traktionsbatterie (4) mittels der Traktionsbatteriepositionierungseinrichtung zu dem wenigstens einen Kühlkörper (5) hin bewegt wird.

5. Verfahren nach einem der vorhergehenden Ansprüche, **dadurch gekennzeichnet, dass** die Ladestation (2) eine Fahrzeugpositionierungseinrichtung (11) umfasst, wobei das die nachzuladende Traktionsbatterie (4) aufweisende Fahrzeug (1) auf der Fahrzeugpositionierungseinrichtung (11) abgestellt wird und zur thermischen Kontaktierung des wenigstens einen Kühlkörpers (5) mit der wenigstens einen Kontaktierungsfläche (10) der Traktionsbatterie (4) das Fahrzeug (1) mittels der Fahrzeugpositionierungseinrichtung (11) zu dem wenigstens einen Kühlkörper (5) hin bewegt wird.

6. Verfahren nach einem der vorhergehenden Ansprüche, **dadurch gekennzeichnet, dass** der wenigstens eine Kühlkörper (5) wenigstens eine erste Position und wenigstens eine zweite Position einnehmen kann, wobei der wenigstens eine Kühlkörper (5) zur Temperierung der Traktionsbatterie (4) aus der ersten Position in die zweite Position verbracht wird und der wenigstens eine Kühlkörper (5) in der zweiten Position die wenigstens eine Kontaktierungsfläche (10) der Traktionsbatterie (4) thermisch kontaktiert.

7. Verfahren nach Anspruch 6, **dadurch gekennzeichnet, dass** der wenigstens eine Kühlkörper (5) nach dem Ladevorgang von der zweiten Position in die erste Position verbracht wird.

8. Verfahren nach Anspruch 6 oder Anspruch 7, **dadurch gekennzeichnet, dass** der wenigstens eine Kühlkörper (5) an einer steuerbaren Positionierungseinrichtung (8) angeordnet ist, wobei die Positionierungseinrichtung (8) derart gesteuert wird, dass der wenigstens eine Kühlkörper (5) zur Temperierung der Traktionsbatterie (4) von der Positionierungseinrichtung (8) aus der ersten Position in die zweite Position verbracht wird.

9. Verfahren nach Anspruch 8, **dadurch gekennzeichnet, dass** die Positionierungseinrichtung (8) eine Hubeinrichtung ist und der wenigstens eine Kühlkörper (5) in der ersten Position in Bodennähe angeordnet ist oder zumindest teilweise im Boden (7) eingelassen ist, wobei das die nachzuladende Traktionsbatterie (4) aufweisende Fahrzeug (1) mit der wenigstens einen Kontaktierungsfläche (10) der Traktionsbatterie (4) über der Hubeinrichtung mit dem wenigstens einen Kühlkörper (5) positioniert wird und der wenigstens eine Kühlkörper (5) mittels der Hubeinrichtung in die zweite Position verbracht wird.

10. Verfahren nach einem der Ansprüche 6 bis 9, **dadurch gekennzeichnet, dass** der wenigstens eine Kühlkörper (5) mit der wenigstens einen Kontaktierungsfläche (10) der Traktionsbatterie (4) in der zweiten Position lösbar verbunden wird.

11. Verfahren nach einem der vorhergehenden Ansprüche, **dadurch gekennzeichnet, dass** die Traktionsbatterie (4) und/oder die wenigstens eine Kontaktierungsfläche (10) der Traktionsbatterie (4) wenigstens ein Haltemittel zur Halterung des wenigstens einen Kühlkörpers (5) aufweist, wobei der wenigstens eine Kühlkörper (5) unter Nutzung des wenigstens einen Haltemittels mit der wenigstens einen Kontaktierungsfläche (10) in thermischen Kontakt gebracht wird.

12. Verfahren nach einem der vorhergehenden Ansprüche, **dadurch gekennzeichnet, dass** der wenigstens eine Kühlkörper (5) vor Beginn eines Ladevorgangs und/oder nach Ende eines Ladevorgangs gekühlt wird, wobei der wenigstens eine Kühlkörper (5) Mittel zur Speicherung thermischer Energie umfasst, sodass der wenigstens eine Kühlkörper (5) bei thermischer Kontaktierung der wenigstens einen Kontaktierungsfläche (10) der Traktionsbatterie (4) eine Wärmesenke bildet.

13. Verfahren nach einem der vorhergehenden Ansprüche, **dadurch gekennzeichnet, dass** der wenigstens eine Kühlkörper (5) während eines Ladevorgangs zumindest teilweise von einem Kühlmittel durchströmt wird, sodass der wenigstens eine Kühlkörper (5) bei thermischer Kontaktierung der wenigstens einen Kontaktierungsfläche (10) der Traktionsbatterie (4) eine Wärmesenke bildet.

14. Ladestation (2) zum Nachladen einer in einem Fahrzeug (1) angeordneten Traktionsbatterie (4), wobei die Traktionsbatterie (4) wenigstens eine Kontaktierungsfläche (10) zur thermischen Kontaktierung der Traktionsbatterie (4) aufweist, **dadurch gekennzeichnet, dass** die Ladestation (2) Mittel zum Ausführen eines Verfahrens nach einem der Ansprüche 1 bis 13 aufweist.

## Claims

1. Method for the temperature control of a traction battery (4) arranged in a vehicle (1) during a charging process at a charging station (2), wherein the traction battery (4) has at least one contacting surface (10) for thermally contacting the traction battery (4), **characterized in that** at least one cooling body (5) provided by the charging station (2) is thermally contacted with the at least one contacting surface (10) of the traction battery (4), in such a way that an exchange of thermal energy between the at least one cooling body (5) and the traction battery (4) via the least one contacting surface (10) thermally contacted with the least one cooling body (5) is enabled and the traction battery (4) is temperature-controlled by the at least one cooling body (5), at least during the charging process.

2. Method according to Claim 1, **characterized in that** in order to thermally contact the at least one cooling body (5) with the at least one contacting surface (10) of the traction battery (4), the at least one cooling body (5) is moved toward the traction battery (4) and/or the traction battery (4) is moved toward the at least one cooling body (5), wherein the traction battery (4) remains connected to the vehicle (1) during the charging process.

3. Method according to one of the preceding claims, **characterized in that** the traction battery (4), prior to the start of the charging process, is brought into a defined position relative to the position of the least one cooling body (5) by positioning of the vehicle (1) containing the traction battery (4), prior to the start of the charging process.

4. Method according to one of the preceding claims, **characterized in that** the vehicle (1) containing the traction battery (4) comprises a traction battery positioning device, wherein the traction battery (4) is moved by means of the traction battery positioning device toward the at least one cooling body (5) in order to thermally contact the at least one cooling body (5) with the at least one contacting surface (10) of the traction battery (4).

5. Method according to one of the preceding claims, **characterized in that** the charging station (2) comprises a vehicle positioning device (11), wherein the vehicle (1) containing the traction battery (4) to be recharged is stopped on the vehicle positioning device (11), and the vehicle (1) is moved toward the at least one cooling body (5) by means of the vehicle positioning device (11) in order to thermally contact the at least one cooling body (5) with the at least one contacting surface (10) of the traction battery (4).

6. Method according to one of the preceding claims, **characterized in that** the at least one cooling body (5) may adopt at least one first position and at least one second position, wherein the at least one cooling body (5) for the temperature control of the traction battery (4) is brought from the first position into the second position and the at least one cooling body (5) in the second position thermally contacts the at least one contacting surface (10) of the traction battery (4).

7. Method according to Claim 6, **characterized in that** the at least one cooling body (5) is brought from the second position into the first position following the charging process.

8. Method according to Claim 6 or Claim 7, **characterized in that** the at least one cooling body (5) is arranged on a controllable positioning device (8), wherein the positioning device (8) is controlled in such a way that the at least one cooling body (5) is brought by the positioning device (8) from the first position into the second position for the temperature control of the traction battery (4).

9. Method according to Claim 8, **characterized in that** the positioning device (8) is a lifting device and the at least one cooling body (5) is arranged in the first position close to the ground or is at least partially recessed in the ground (7), wherein the vehicle (1) containing the traction battery (4) to be recharged is positioned with the at least one contacting surface (10) of the traction battery (4) above the lifting device with the at least one cooling body (5), and the at least one cooling body (5) is brought by means of the lifting device into the second position.

10. Method according to one of Claims 6 to 9, **characterized in that** the at least one cooling body (5) is detachably connected to the at least one contacting surface (10) of the traction battery (4) in the second position.

11. Method according to one of the preceding claims, **characterized in that** the traction battery (4) and/or the at least one contacting surface (10) of the traction battery (4) has at least one retaining means for holding the at least one cooling body (5), wherein the at least one cooling body (5) is brought into thermal contact with the at least one contacting surface (10) with use of the at least one retaining means.

12. Method according to one of the preceding claims, **characterized in that** the at least one cooling body (5) is cooled prior to the start of a charging process and/or following the end of a charging process, wherein the at least one cooling body (5) comprises means for storing thermal energy, such that the at least one cooling body (5) forms a heat sink in the event of thermal contacting of the at least one contacting surface (10) of the traction battery (4).

13. Method according to one of the preceding claims, **characterized in that** a coolant is passed through at least part of the at least one cooling body (5) during a charging process, such that the at least one cooling body (5) forms a heat sink in the event of thermal contacting of the at least one contacting surface (10) of the traction battery (4).

14. Charging station (2) for recharging a traction battery (4) arranged in a vehicle (1), wherein the traction battery (4) has at least one contacting surface (10) for thermally contacting the traction battery (4), **characterized in that** the charging station (2) has means for carrying out a method according to one of Claims 1 to 13.

## Revendications

1. Procédé permettant de thermoréguler une batterie de traction (4) disposée dans un véhicule (1) pendant une procédure de charge dans une station de charge (2), dans lequel la batterie de traction (4) présente au moins une face de contact (10) pour la mise en contact thermique de la batterie de traction (4), **caractérisé en ce que** l'on met en contact thermique au moins un corps de refroidissement (5) préparé du côté de la station de charge (2) avec ladite au moins une face de contact (10) de la batterie de traction (4), de telle manière qu'un échange d'énergie thermique soit possible entre ledit au moins un corps de refroidissement (5) et la batterie de traction (4) au moyen de ladite au moins une face de contact (10) mise en contact thermique avec ledit au moins un corps de refroidissement (5) et on assure la thermorégulation de la batterie de charge (4) au moins pendant la procédure de charge au moyen dudit au moins un corps de refroidissement (5).

2. Procédé selon la revendication 1, **caractérisé en ce que**, pour la mise en contact thermique dudit au moins un corps de refroidissement (5) avec ladite au moins une face de contact (10) de la batterie de traction (4), on déplace ledit au moins un corps de refroidissement (5) vers la batterie de traction (4) et/ou on déplace la batterie de traction (4) vers ledit au moins un corps de refroidissement (5), la batterie de traction (4) restant reliée au véhicule (1) pendant la procédure de charge.

3. Procédé selon l'une quelconque des revendications précédentes, **caractérisé en ce que** l'on amène la batterie de traction (4), avant le commencement de la procédure de charge, par positionnement du véhicule (1) présentant la batterie de traction (4), dans une position définie par rapport à la position dudit au moins un corps de refroidissement (5) avant le commencement de la procédure de charge.

4. Procédé selon l'une quelconque des revendications précédentes, **caractérisé en ce que** le véhicule (1) présentant la batterie de traction (4) comprend un dispositif de positionnement de la batterie de traction, dans lequel on déplace la batterie de traction (4) vers ledit au moins un corps de refroidissement (5) au moyen du dispositif de positionnement de la batterie de traction en vue de la mise en contact thermique dudit au moins un corps de refroidissement (5) avec ladite au moins une face de contact (10) de la batterie de traction (4).

5. Procédé selon l'une quelconque des revendications précédentes, **caractérisé en ce que** la station de charge (2) comprend un dispositif de positionnement du véhicule (11), dans lequel on arrête le véhicule (1) présentant la batterie de traction (4) à recharger sur le dispositif de positionnement du véhicule (11) et on déplace le véhicule (1) vers ledit au moins un corps de refroidissement (5) au moyen du dispositif de positionnement du véhicule (11) en vue de la mise en contact thermique dudit au moins un corps de refroidissement (5) avec ladite au moins une face de contact (10) de la batterie de traction (4).

6. Procédé selon l'une quelconque des revendications précédentes, **caractérisé en ce que** ledit au moins un corps de refroidissement (5) peut occuper au moins une première position et au moins une deuxième position, dans lequel on déplace ledit au moins un corps de refroidissement (5) de la première position à la deuxième position en vue de la thermorégulation de la batterie de traction (4) et ledit au moins un corps de refroidissement (5) est en contact thermique dans la deuxième position avec ladite au moins une face de contact (10) de la batterie de traction (4).

7. Procédé selon la revendication 6, **caractérisé en ce que** l'on déplace ledit au moins un corps de refroidissement (5), après la procédure de charge, de la deuxième position à la première position.

8. Procédé selon la revendication 6 ou 7, **caractérisé en ce que** ledit au moins un corps de refroidissement (5) est disposé sur un dispositif de positionnement réglable (8), dans lequel on règle le dispositif de positionnement (8) de telle manière que ledit au moins un corps de refroidissement (5) soit déplacé de la première position à la deuxième position par le dispositif de positionnement (8) en vue de la thermorégulation de la batterie de traction (4).

9. Procédé selon la revendication 8, **caractérisé en ce que** le dispositif de positionnement (8) est un dispositif de levage et ledit au moins un corps de refroidissement (5) dans la première position est disposé à proximité du sol ou est au moins en partie inséré dans le sol (7), dans lequel on positionne le véhicule (1) présentant la batterie de traction (4) à recharger avec ladite au moins une face de contact (10) de la batterie de traction (4) au-dessus du dispositif de levage avec ledit au moins un corps de refroidissement (5) et on amène ledit au moins un corps de refroidissement (5) dans la deuxième position au moyen du dispositif de levage.

10. Procédé selon l'une quelconque des revendications 6 à 9, **caractérisé en ce que** l'on assemble ledit au moins un corps de refroidissement (5) dans la deuxième position de façon séparable à ladite au moins une face de contact (10) de la batterie de traction (4).

11. Procédé selon l'une quelconque des revendications précédentes, **caractérisé en ce que** la batterie de traction (4) et/ou ladite au moins une face de contact (10) de la batterie de traction (4) présente au moins un moyen de retenue pour le maintien dudit au moins un corps de refroidissement (5), dans lequel on met ledit au moins un corps de refroidissement (5) en contact thermique avec ladite au moins une face de contact (10) en utilisant ledit au moins un moyen de retenue.

12. Procédé selon l'une quelconque des revendications précédentes, **caractérisé en ce que** l'on refroidit ledit au moins un corps de refroidissement (5) avant le commencement d'une procédure de charge et/ou après la fin d'une procédure de charge, dans lequel ledit au moins un corps de refroidissement (5) comprend des moyens pour accumuler de l'énergie thermique, de telle manière que ledit au moins un corps de refroidissement (5) forme un puits de chaleur lors de la mise en contact thermique de ladite au moins une face de contact (10) de la batterie de traction (4).

13. Procédé selon l'une quelconque des revendications précédentes, **caractérisé en ce que** ledit au moins un corps de refroidissement (5) est parcouru au moins en partie par un agent réfrigérant pendant une procédure de charge, de telle manière que ledit au moins un corps de refroidissement (5) forme un puits de chaleur lors de la mise en contact thermique de ladite au moins une face de contact (10) de la batterie de traction (4).

14. Station de charge (2) permettant de recharger une batterie de traction (4) disposée dans un véhicule (1), dans laquelle la batterie de traction (4) présente au moins une face de contact (10) pour la mise en contact thermique de la batterie de traction (4), **caractérisée en ce que** la station de charge (2) présente des moyens pour la mise en oeuvre d'un procédé selon l'une quelconque des revendications 1 à 13.
